# EUROPÄISCHE PATENTSCHRIFT

(11) **EP 1 084 299 B1**
(45) Veröffentlichungstag und Bekanntmachung des Hinweises auf die Patenterteilung: **06.11.2002**
(21) Anmeldenummer: 98958763.9
(22) Anmeldetag: 16.12.1998
(51) Int. Cl.: D21H 25/18, B41M 7/00, D21H 17/73

(54) **VORRICHTUNG ZUR ENTSÄUERUNG VON SCHRIFTGUT**
DEVICE FOR THE DEACIDIFICATION OF PRINTED MATTER
PROCEDE POUR DESACIDIFIER DES DOCUMENTS

(30) Priorität: 07.04.1998 EP 98201091
(43) Veröffentlichungstag der Anmeldung: 21.03.2001
(60) Teilanmeldung: 02005934.1
(73) Patentinhaber: RUAG Munition, 3602 Thun (CH)
(72) Erfinder: HERREN, Christian, CH-3204 Rosshäusern (CH); MONKEWITZ, Martin, CH-6006 Luzern (CH)
(74) Vertreter: Frauenknecht, Alois J.
(86) Internationale Anmeldenummer: CH9800540
(87) Internationale Veröffentlichungsnummer: WO99051818

(56) Entgegenhaltungen:
- GB-A- 2 142 825
- US-A- 3 898 356
- US-A- 4 522 843
- US-A- 5 433 827

## Beschreibung

Die vorliegende Erfindung bezieht sich auf eine Vorrichtung gemäss Anspruch 1.

Seit der Erfindung des Holzschliffs im Jahr 1844 ist weltweit das gesamte Schriftgut einem durch eine inhärente Übersäuerung bedingten Zerfall unterworfen. Um das in Milliarden Dokumenten gespeicherte Kulturgut zu retten, wurden zahlreiche Versuche unternommen, die Papiermasse zu entsäuern.

Diese Versuche lassen sich in drei Gruppen unterteilen:
1. Nassbehandlung
2. Gasbehandlung
3. Trockenbehandlung mit alkalischem Pulver

Als gefährlichste Methode zur Behandlung von wertvollen Dokumenten hat sich die Nassbehandlung mit Lösungen wie Peroxid etc. erwiesen; die Blätter verziehen sich oder werden wellig, in einigen Fällen löst sich sogar die Druckfarbe und verläuft. Die Anwendung von Gasen wie Morpholindämpfe etc. erfordert den Einsatz einer aufwendigen Vakuum-Kammer und verlängert zusätzlich die Zykluszeit für die Behandlung. Die Trockenbehandlung mit alkalischen, pulverförmigen Substanzen ist oft am ungleichmässigen Pulvereintrag und an der Wirksamkeit der Substanz gescheitert.

Aus der US -A- 5,433,827 ist ein Verfahren zur Entsäuerung von Schriftgut sowie eine dabei verwendete Substanz bekannt. Nach diesem Verfahren werden die Seiten von Büchern mit Papier, welches mit einer hochkonzentrierten Entsäuerungssubstanz belegt ist, in Kontakt gebracht und mechanisch, unter Druck, bei erhöhter Feuchtigkeit - über 75%, bevorzugt 97% relativer Feuchte - mehrere Tage gepresst. Als Entsäuerungssubstanz dienen dabei Alkali- und Erdalkalicarbonate und ihre Gemische. Als Alternative ist vorgeschlagen, die zur Entsäuerung bestimmten Seiten mit Kalzium- oder Magnesiumcarbonat zu bestäuben. Die Verfahren basieren auf einer Ionenmigration der Entsäuerungssubstanz und sind daher druck- und feuchtigkeitsabhängig.

Es ist eine Vorrichtung bekannt (DE -A1- 44 36 635), bei der Bücher durch einen vertikal orientierten Halter am Buchrücken gefasst werden und die einzelnen Buchseiten durch mit Wirkstoffen beladene Rundstrahlen von unten nach oben durchblasen und bewegt werden. Dies führt zu einer mechanischen Belastung der Seiten und ergibt kein definiertes Blättern.

Es ist daher Aufgabe der Erfindung, eine verbesserte Vorrichtung zu schaffen, die mit einer Aufnahmevorrichtung versehen auch gebundene Bücher, Kataloge, Broschüren etc. durch die Verwendung eines Wirkstoffes zu entsäuern vermag, ohne dass diese mechanisch beeinträchtigt oder beschädigt werden.

Die Qualität des Papiers soll dabei von untergeordneter Bedeutung sein. Beim Einsatz des Wirkstoffs darf das Schriftgut nicht beschädigt oder verändert werden. Der Eintrag der Wirksubstanz muss über die ganze Papierfläche gleichmässig erfolgen und von der ersten bis zur letzten Seite eines Buches den gleichen pH-Wert erzielen.

Diese Aufgabe wird durch eine Vorrichtung mit den Merkmalen des Anspruchs 1 gelöst.

Besonders bewährt hat sich bei dieser Vorrichtung das Einbringen des Schriftgutes, indem diese durch zueinander in einer Reihe versetzte Flachstrahlen das Schriftgut umblättert und gleichzeitig mit Wirkstoff belädt. Im Falle von gebundenen Büchern werden diese mit den Buchrücken nach unten in die Stützteile eingelegt und erfahren eine schonende Behandlung durch die Vorrichtung. Durch geeignete Halterungen liessen sich aber auch ungebundene bzw. nicht geheftete Blätter behandeln.

Vorzugsweise wird die Aufnahmevorrichtung für das Schriftgut durch einen mit einem Schwenkdeckel verschliessbaren. Kasten nach Anspruch 2 eingebracht, wodurch sich Emmissionen verhindern lassen.

Strömungstechnisch günstig ist eine Vorrichtung nach Anspruch 3.

Die erweiterte Ausgestaltung nach Anspruch 4 ist kinematisch günstig, d.h. sie erfordert einen nur einfachen Antrieb.

Besonders vorteilhaft ist die Anordnung des Luftverteilers direkt oberhalb der Stützteile, vgl. Anspruch 5.

Durch den Einsatz eines Verdichters, Anspruch 6, wird der Wirkstoff zirkuliert und dadurch mehrfach genutzt.

Mit dem Einbezug eines Nebenstromes mit Filter lässt sich die Vorrichtung soweit von Pulver entleeren, dass sie problemlos geöffnet werden kann; siehe Anspruch 7.

Bewährt hat sich eine über einen weiteren Nebenstrom geschaltete Entfeuchtungskammer gemäss Anspruch 8, wodurch die Feuchte des eingetragenen Pulvers relativ konstant gehalten wird.- Die bei der Behandlung aus den Büchern herausgetragene Feuchte wird dadurch absorbiert.

Die Rückführung des Nebenstromes in den Hauptstrom nach Anspruch 9 erlaubt eine besonders einfache Regelung der Feuchte im Innern der Vorrichtung.

Vorteilhaft ist die Zuführung des Nebenstromes bei der Puiverzuführung, Anspruch 10, weil dadurch das Pulver zuerst mit trockener Luft beaufschlagt und gefördert wird, bevor es mit der feuchteren Luft des Hauptstromes in Berührung kommt.

Bei grösseren Anlagen erscheint eine thermische Entfeuchtungs- und Heizanlage als zweckmässig, da sie einen quasi kontinuierlichen Betrieb erlaubt; vgl. Anspruch 11.

Nachfolgend werden anhand von Zeichnungen Ausführungsbeispiele der Erfindung näher beschrieben, wobei für gleiche Funktionsteile gleiche Bezugsziffern verwendet sind.

### Es zeigen:

- Fig. 1: eine Aufnahmevorrichtung für auffächerbares Schriftgut,
- Fig. 2: Seitenteile der Aufnahmevorrichtung Fig. 1, in Draufsicht,
- Fig. 3: eine Schnittdarstellung durch die Seitenteile Fig. 2,
- Fig. 4: eine Gesamtansicht einer Vorrichtung zur Entsäuerung, mit geöffnetem Schwenkdeckel,
- Fig. 5: Einzelheiten aus Fig. 4, in einer Ausschnittvergrösserung, wobei hier Bücher und Ordner in die Vorrichtung eingelegt sind,
- Fig. 6: Teile der Vorrichtung entsprechend Fig. 5 in ihrer Arbeitsstellung, wobei das Durchblättern des Schriftgutes ersichtlich ist,
- Fig. 7: eine vergrösserte Darstellung der Luftzuführung nach den Fig. 4 bis 6,
- Fig. 8: einen Teilschnitt der Luftzuführung nach Fig. 7,
- Fig. 9: die Luftzuführung nach Fig. 8 in einer um 90° gedrehten Draufsicht,
- Fig. 10: die Darstellung nach Fig. 4 bei entnommener Aufnahmevorrichtung,
- Fig. 11: die Vorrichtung nach Fig. 4 und 10 von hinten betrachtet, bei geschlossenem Schwenkdeckel,
- Fig. 12: die Vorrichtung bei geschlossenem Schwenkdeckel von vorne betrachtet,
- Fig. 13: ein vereinfachtes Pneumatikschema der gesamten Anlage und
- Fig. 14: ein erweitertes, vereinfachtes Pneumatikschema.

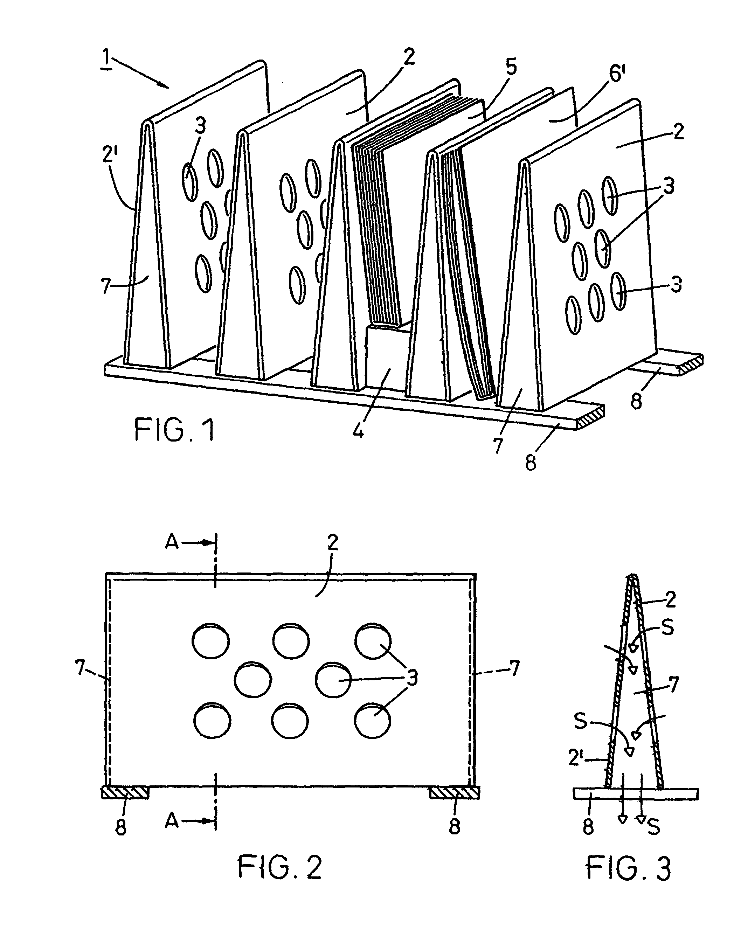

In Fig. 1 ist eine Aufnahmevorrichtung mit 1, ein Ständer für Schriftgut, insbesondere für Bücher, Broschüren und dgl. bezeichnet. Dieser weist links- und rechtsseitige Stützteile 2' bzw. 2 auf. Diese Stützteile besitzen mehrere Durchbrüche 3, welche dem Luftdurchlass dienen. Kleinere Bücher 5 werden auf einen einfachen Sockel 4 gestellt, damit ihre Stirnseite auf gleiche Höhe mit anderem Schriftgut 6', hier eine Broschüre, zu liegen kommt.

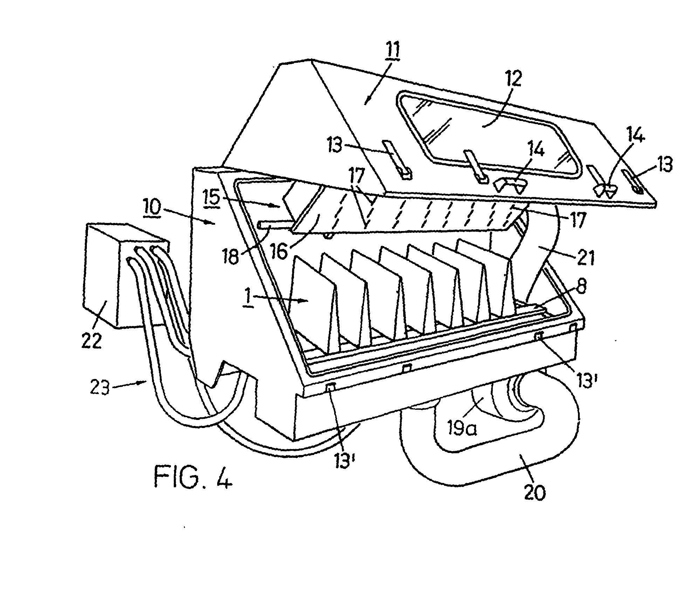

Die Stützteile 2, 2' sind stirnseitig mit Abdeckungen 7 versehen und auf Montage- und Transportleisten 8 befestigt. Die Schnittdarstellung Fig. 3 zeigt den Schnitt A--A aus Fig. 2. Daraus ist ersichtlich, wie sich innerhalb der Stützteile 2, 2' die Strömung S zu einer Kanalströmung ausbildet und die Buchdeckel nach aussen zieht und das Buch öffnet.

Die Vorrichtung nach Fig. 4 besteht im wesentlichen aus einem verschliessbaren Kasten 10 mit Verschlussteilen 13', welcher den Ständer 1 aufnimmt. Der Schwenkdeckel des Kastens 10 ist mit 11 bezeichnet und besitzt auf seiner Vorderseite ein Sichtfenster 12, Verschlussteile 13 sowie Handgriffe 14. Im Schwenkdeckel 11 verschieblich befestigt, ist ein kastenförmiger Luftverteiler 15 mit einer Abströmplatte 16, die ihrerseits mit Luftauslässen 17 versehen ist. Zur Längsverschiebung des Luftverteilers 15 dient eine abgedichtete Führungsstange 18, welche hier den Luftverteiler 15 stirnseitig überragt.

Unterhalb des Kastens 10 ist ein Niederdruckventilator 19a montiert, der über einen grossvolumigen Absaugschlauch 20 und einen ebensolchen Zuluftschlauch 21 die Luft aus dem Inneren des Kastens 10 absaugt und über den Luftverteiler 15 und die Luftauslässe 17 wieder zuführt. Zusätzlich ist ausserhalb des Kastens 10 ein Kühlaggregat 22 angeordnet, welches über Schläuche 23 mit dem Kasten in Verbindung steht.

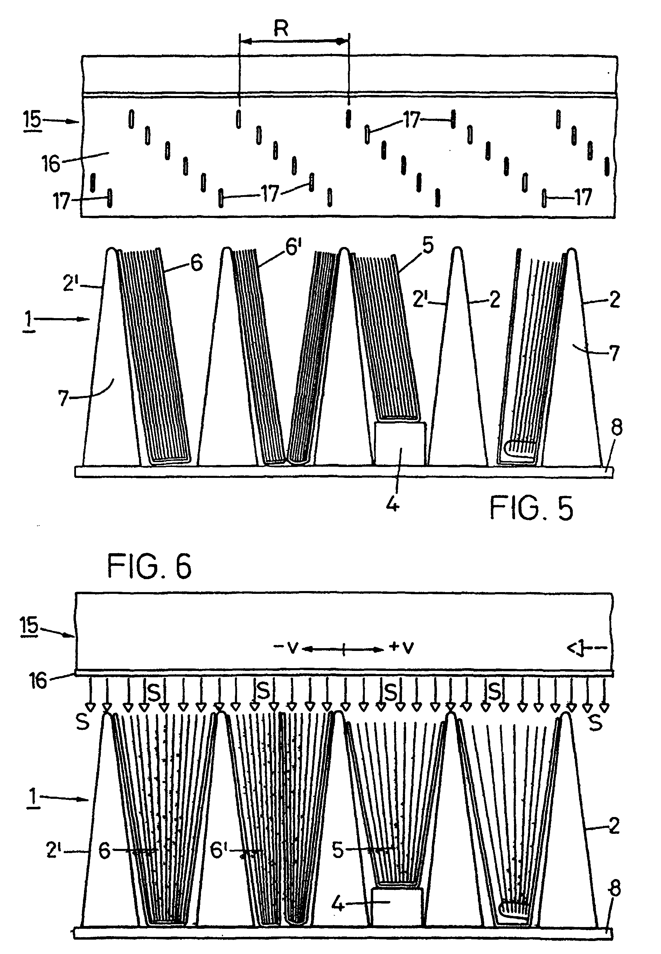

In der Darstellung Fig. 5 ist der Schwenkdeckel 11 - nicht gezeichnet - geöffnet; die Position des Luftverteilers 15 aber entsprechend eingezeichnet. Hier sind die parallel versetzt zueinander angeordneten Luftauslässe 17 in Draufsicht zu sehen. Die Rasterbreite einer Reihe hinter einander parallel versetzter Luftauslässe 17 ist mit R bezeichnet.

Entsprechend Fig. 6 ist der Schwenkdeckel 11 geschlossen und die Anlage in Betrieb. Dabei wird der Luftverteiler 15 mit konstanter Geschwindigkeit, um das Mass R, vgl. Fig. 5, hin und her bewegt, was durch +v und -v charakterisiert ist.- Die Seiten des Schriftgutes 5, 6, 6' werden durch die Strömung S einzeln durchgeblättert und mit Wirkstoff beladen.

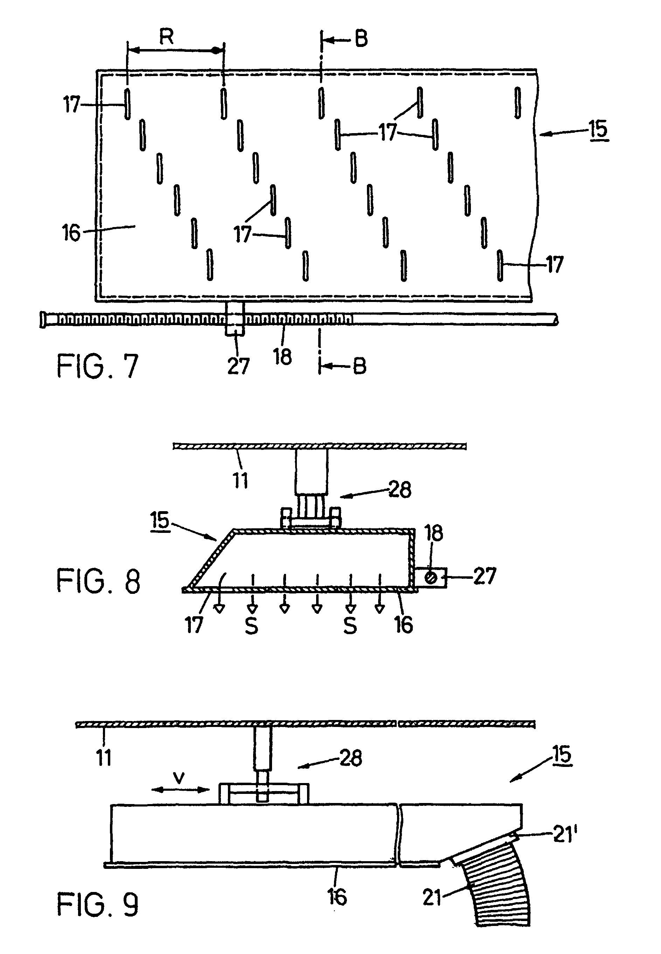

In Fig. 7 ist als weitere Einzelheit die Führungsstange 18 mit ihrer Gleitbüchse 27 eingezeichnet, welche zusätzlich mit einem nicht dargestellten Faltenbalg vor Verschmutzung durch den Wirkstoff geschützt ist.

Die Schnittdarstellung Fig. 8 entspricht dem in Fig. 7 eingezeichneten Schnitt B--B und zeigt den kastenförmigen Aufbau des Luftverteilers 15 genauer. Dieser ist über eine Aufhängung/Führung 28 am Schwenkdeckel 11 befestigt und durch die mit den Luftauslässen 17 versehene Abströmplatte 16 abgeschlossen.

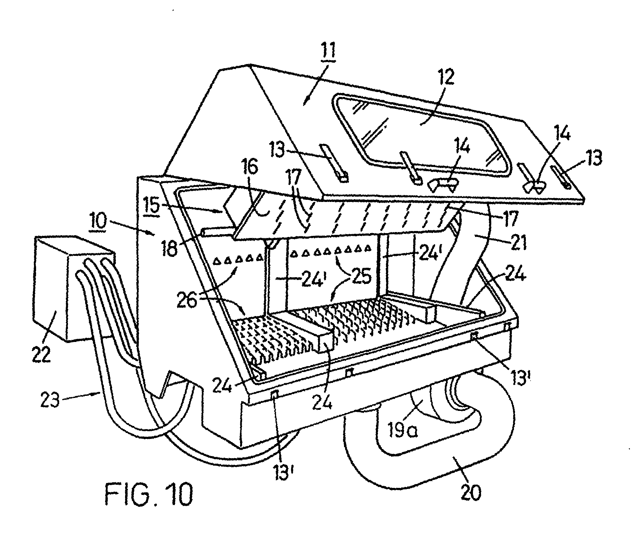

Die Darstellung Fig. 9 zeigt die Bewegungsrichtung v des Kastens 15 und zusätzlich rechtsseitig den flexiblen Zuluftschlauch 21 mit seinem Anschluss-Stutzen 21'.

In Fig. 10 sind wiederum die gleichen Einzelheiten wie in Fig. 4 zu sehen, nur ist hier die Aufnahmevorrichtung 1 entnommen, so dass Auflagewinkel 24, 24' und Kühl- Lamellen/Leitbleche 25 sowie Heiz-Lamellen 26 mit Leitblechen sichtbar werden.

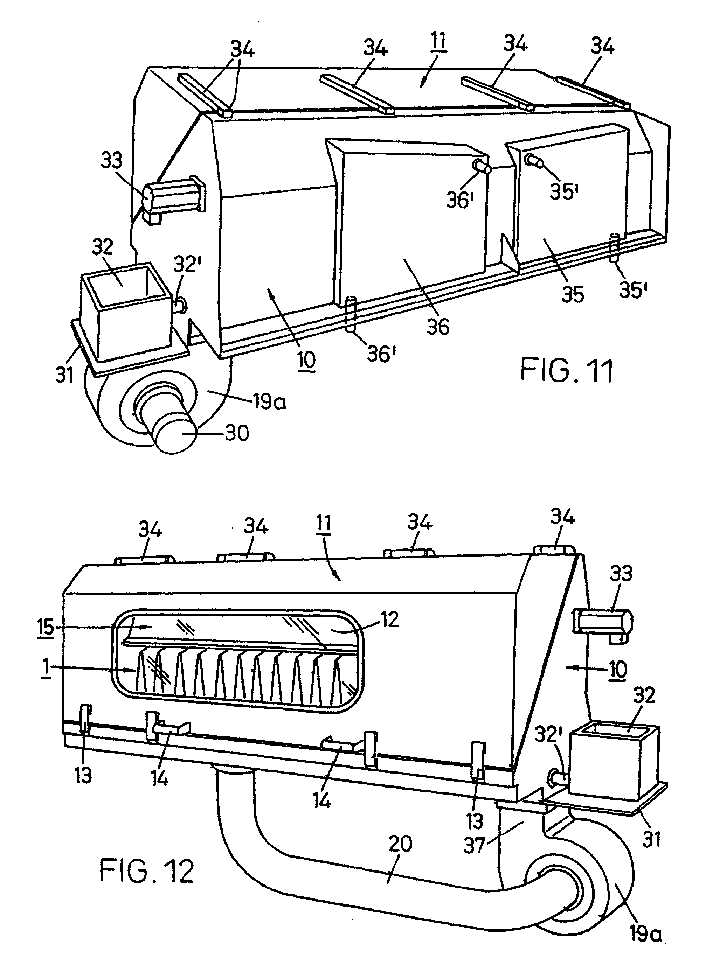

Nach Fig. 11 weist die Rückseite der Vorrichtung ein Heisswasser-Reservoir 35 und ein Kühlflüssigkeits-Reservoir 36 auf, welche entsprechende Anschlüsse 35' und 36' besitzen und mit den Schläuchen 23, Fig. 10, verbunden sind. Im weiteren sind hier der Niederdruckventilator 19a mit seinem Antrieb, einem Elektromotor 30 und ein auf einer Trägerplatte 31 aufgebauter Schneckenförderer 32 mit einer Pulverzuführung 32' zu sehen. Darüber befindet sich ein Getriebemotor 33, welcher dem Linearantrieb des Luftverteilers 15 dient, vgl. Fig. 6 und 7. Ebenfalls sichtbar sind oberseitige Scharniere 34, die zum Aufklappen des Schwenkdeckels 11 bestimmt sind.

Im betriebsbereiten Zustand stellt sich die Vorrichtung gemäss Fig. 12 dar, wobei die Verschlussteile 13 den kastenförmigen Innenraum hermetisch abschliessen. Sichtbar ist hier auch der Druck-Anschluss 37 am Kasten 10.

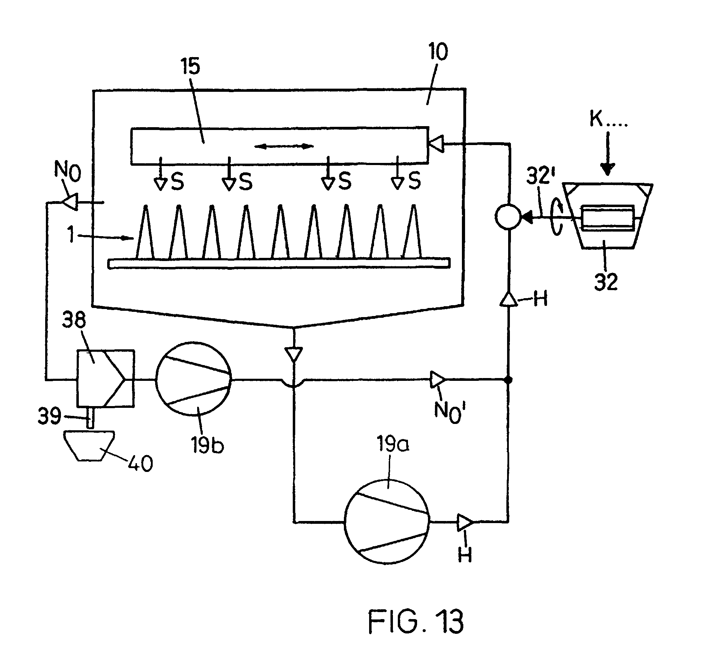

Die Prinzipdarstellung Fig. 13 zeigt wiederum den Kasten 10 mit seinem hin- und herbewegbaren Luftverteiler 15 und dem eingelagerten Ständer 1. Ein Hauptstrom H, beschleunigt durch einen Niederdruckventilator 19a saugt Luft vom Boden des Kastens 10 ab und fördert sie über den Luftverteiler 15 wieder in diesen zurück. In den Hauptstrom H greift die Pulverzuführung 32' des rotierenden Schneckenförderers 32 ein, welcher mit dem Wirkstoff - mit K bezeichnet - beschickt wird.

Nach der Beendigung eines Behandlungsprozesses wird der Ventilator 19a abgeschaltet und ein weiterer Niederdruckventilator 19b in einem Nebenstrom N₀ zugeschaltet, der über ein Filter 38 den pulverförmigen Wirkstoff K aus dem Luftstrom extrahiert und über einen Ablauf 39 in einen Auffangbehälter 40 abführt. Der gereinigte Nebenstrom ist mit N₀' bezeichnet.

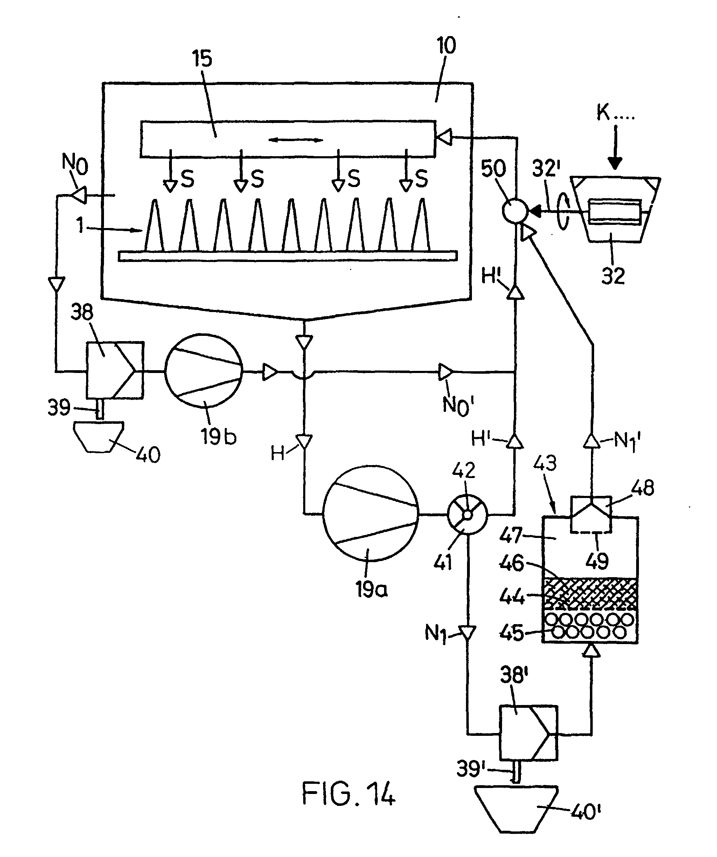

Die gegenüber Fig. 13 erweiterte Anlage Fig. 14 besitzt zusätzlich zu Fig. 13 eine Dreiweg-Klappe 41, welche den Hauptstrom H in einen Hauptstrom H' und einen Nebenstrom N₁ aufteilt. Der Nebenstrom N₁ ist über ein weiteres Filter 38' mit Ablauf 39' und Auffangbehälter 40' zu einer Entfeuchtungskammer 43 geführt, welche ein Träger-Sieb 44 aufweist, wobei unterhalb des Siebes 44 kugelförmige Luftverteiler 45 und über dem Sieb 44 Entfeuchtungsmaterial 46 eingelagert sind. Der darüber befindliche Sammelraum 47 besitzt ein Filter 48 mit Sieb-Einlass 49 und liefert einen entfeuchteten Nebenstrom N₁' zu einer Mischdüse 50, welche als zweistoffiger Ejektor ausgebildet ist. Die Düse 50 fördert den Wirkstoff K mittels des entfeuchteten Nebenstromes N₁' in den Luftverteiler 15.

Die Dreiweg-Klappe 41 ist zentral mit einem Stellglied 42 verbunden, welches eine stufenlose Aufteilung des Hauptstromes H' und des Nebenstromes N₁ erlaubt.

Die Wirkstoffe K lassen sich in einfachster Weise und kostengünstig herstellen, indem die Komponenten mehrfach miteinander vermahlen und anschliessend getrocknet werden.

### Mischung 1

90 % KHCO₃ mit 10 % K₂CO₃, eingestellt auf eine Restfeuchtigkeit von 10 bis 15 Gew.-% ergeben auf dem behandelten Papier, nach mittlerer Behandlungszeit einen pH-Wert von 9.0 bis 9.5.

### Mischung 2

99 % KHCO₃ mit 1 % K₂CO₃, eingestellt auf eine Restfeuchtigkeit von ca. 10 Gew.-% ergeben auf dem behandelten Papier einen pH-Wert von 8.2 bis 8.5.

### Mischung 3

99,9 % KHCO₃ mit 0,1 % K₂CO₃, eingestellt auf eine Restfeuchtigkeit von ca. 10 Gew.-% ergeben auf dem behandelten Papier einen pH-Wert von 7.2 bis 7.5.

Es hat sich gezeigt, dass die Restfeuchtigkeit der Mischungen bei einer Lagerung von einigen Tagen bei Raumtemperatur sehr rasch zunimmt, insbesondere bei der Mischung 1.

Zur Verbesserung der Rieselfähigkeit bzw. der Transportfähigkeit des Wirkstoffes in der Anlage empfiehlt es sich, eine elektrostatisch aktive Substanz beizumengen, beispielsweise in Form von Polystyrolkugeln von weniger als 2 mm Durchmesser.

Zur Aufbereitung der Komponenten hat sich folgendes bewährt:
- Grobvermischen der Haupt-Komponenten KHCO₃ und K₂CO₃
- Zuschlag von eventuellen weiteren Komponenten, beispielsweise Kaliumhydrogenphosphat oder Ammoniumthiocyanat
- Vermahlen der Mischung in einer Standard-Stiftmühle in wenigstens zwei Durchlaufen
- leichtes Trocknen der Mischung im Umlufttrockenschrank bei maximal 50°C während 12 h, in einer Schichtdicke von 5 mm
- Abpacken in luft- und feuchtigkeitsdichtem Material

### Prozessführung

Das zu behandelnde Schriftgut 5, 6 und 6' wird mit dem Rücken nach unten in den Ständer 1 eingelegt und in den Kasten 10 eingebracht und verschlossen. Während eines Zeitintervalles von 15 bis 30 Minuten wird der Hauptstrom H durch den Niederdruckventilator 19a über den Luftverteiler 15 zugeführt und das Schriftgut soweit erforderlich bei Raumtemperatur oder leicht erhöhter Temperatur getrocknet, bis es ca. 0.5 bis 2 % des Eigengewichtes verliert. Dabei wird das Schriftgut - meist Bücher - vollständig durchgeblättert, indem der Luftverteiler 15 sich linear, sägezahnartig hinund herbewegt und dabei den Weg R, vgl. Fig. 7, überstreicht.

Jetzt wird über den Schneckenförderer 32 Wirkstoff K - je nach zu erreichendem pH-Wert ausgewählt - dem Hauptstrom H zugeführt. Die Masse an notwendigem Wirkstoff K ist abhängig von der Masse Schriftgut und beträgt etwa 5 % von dessen Masse. Durch die turbulente Luftführung in Kasten 10 wird eine homogene Verteilung des Wirkstoffes auf dem Papier sichergestellt, wobei überschüssiges Material nach einer Behandlungsdauer von 10 bis 15 Minuten durch Abschalten des Hauptstromes H und Zuschalten des Nebenstromes N₀ aus dem Schriftgut abgeführt wird und dieses weitgehend staubfrei entnommen werden kann.

Der Wirkstoff K kann mehrfach genutzt werden und muss vor jeder Behandlung auf seine vorgegebene Masse ergänzt werden. Durch erneutes Mahlen und Trocknen lässt sich der Wirkstoff zudem rezirkulieren bzw. wieder auf die gewünschte Feuchtigkeit einstellen.

In gewissen Fällen kann es zweckmässig sein, das Schriftgut nach der Behandlung mit dem Wirkstoff K wieder zu befeuchten, d.h. zu rekonditionieren. Dies geschieht am einfachsten in einem durchströmten Behältnis, welches mit einem Ultraschall-Zerstäuber ausgerüstet, einen feuchten Luftstrom erzeugt.

### Qualitätsmerkmale

Die Behandlung zeichnet sich durch eine vollständige Entsäuerung des Schriftgutes aus und bringt eine nachweisbar vorhandene alkalische Reserve auf dieses auf. Die Ablagerung dieser Reserve beträgt im Mittel 0.5 % des Papiergewichtes. Es findet keine Reaktion mit der Papiermatrix oder mit dem Satz- und Druckbild statt, d.h. es sind keine thermischen Einflüsse und keine Veränderung der Druckqualität zu verzeichnen. Es resultieren keine toxikologisch bedenklichen Ablagerungen; es ist keine Geruchsbelastung des Schriftgutes vorhanden. Es entstehen keine Verfärbungen und keine permanenten staubförmigen Ablagerungen, auch nicht auf Hochglanzdruckseiten. Der Buchrücken bleibt mechanisch unversehrt und zwar abhängig von der Art der Bindung. Die Behandlungsqualität ist unabhängig von der Anzahl Seiten; sie wurde mit Büchern von 30 bis 1000 Seiten verifiziert. Die Formate des Schriftgutes spielen ebenfalls keine Rolle in Bezug auf die Behandlungsqualität und/oder Art.

### Untersuchung an Schriftgut unterschiedlicher Papiergewichte

| **Qualitätskriterium** | **Offenes Papier 50 g/m**^{**2**} | **Offenes Papier 80 g/m**^{**2**} | **Papier gestrichen 80 g/m**^{**2**} | **Papier gestrichen 120 g/m**^{**2**} |
|---|---|---|---|---|
| Vollständige Entsäuerung | erfüllt | erfüllt | erfüllt | erfüllt |
| Abgelagerte alkalische Reserve | bis zu 2% CaCO₃ | bis zu 1.2 % CaCO₃ | 0.4 bis 0.6 % CaCO₃ | 0.3 bis 0.4 % CaCO₃ |
| Keine nachweisbare Reaktion mit Papier und Druck | erfüllt | erfüllt | erfüllt | erfüllt |
| Keine toxikologisch bedenklichen Ablagerungen | erfüllt | erfüllt | erfüllt | erfüllt |
| Keine Geruchsbelastung | erfüllt | erfüllt | erfüllt | erfüllt |
| Keine Verfärbung | erfüllt | erfüllt | erfüllt | erfüllt |
| Keine staubförmigen Ablagerungen (permanent) | erfüllt | erfüllt | erfüllt | erfüllt |
| Kein Einfluss auf Bindungen | erfüllt | erfüllt | erfüllt | erfüllt |

### Verarbeitungsleistung

Mit der vorgängig beschriebenen Versuchsanlage wurden folgende Behandlungszeiten gemessen:

| **Prozessparameter** | **Dauer [Minuten] Behandlungsprogramm *Standard*** | **Dauer [Minuten] Behandlungsprogramm *Kurz*** |
|---|---|---|
| Beladung | 3' | 3' |
| Trocknung | 30' | 15' |
| Beladung | 15' | 10' |
| Entstauben | 5' | 5' |
| Entladen | 3' | 3' |
| Reinigung | 3' | 3' |
| **Totale Dauer = Kadenz** | **59'** | **39'** |

Wenn von einer Verfügbarkeit der Anlage von 19 Tagen pro Monat und einer Beladung pro Charge mit 20 kg Büchern ausgegangen wird, lassen sich je nach gewähltem Programm zwischen 35 bis 58 t Bücher pro Jahr dauerhaft entsäuern.

Der Einsatz einer chemischen Entfeuchtungskammer 43 ist besonders wirtschaftlich in kleineren Anlagen. Dabei genügt eine Zuführung des Nebenstromes N₁ von einem ölfreien Kompressor (Restfeuchtigkeit RH 15 % bei 25°C) in eine 30 cm hohe Trockenkammer von 300 cm² Grundfläche, beladen mit Silikagel von 3 bis 5 cm Höhe. Die resultierende Feuchte im Nebenstrom N₁' beträgt dabei 3 % RH. In grösseren Anlagen wird vorzugsweise der Nebenstrom N₁ vom Hauptstrom H abgezweigt und ebenfalls chemisch entfeuchtet, vgl. Fig. 14.

In grossen Anlagen empfiehlt es sich, ein separates Kühlaggregat mit einer durch einen Zyklonabscheider versehenen Luftführung vorzusehen, damit die notwendige Entfeuchtung und eventuelle nachträgliche Erwärmung ausserhalb des Kastens 10, ohne Korrosions- und Vereisungsgefahr durchgeführt werden kann.

Selbstverständlich kann im Sinne einer kinematischen Umkehr auch die Aufnahmevorrichtung für das Schriftgut bewegt werden und die Flachstrahlen können ortsfest eingesetzt werden.

Ebenfalls können dem Wirkstoff weitere Komponenten beigemengt werden, beispielsweise können dies Substanzen mit stark hygroskopischen Eigenschaften und geeignetem pH-Wert sein, wie Kaliumhydrogenphosphat und Ammoniumthiocyanat. Eine solche Mischung erscheint insbesondere bei hochgestrichenen Hochglanzpapieren eine Verbesserung der Ablagerung der alkalischen Reserve zu erbringen.

Der Erfindungsgegenstand zeichnet sich durch eine hohe Wirtschaftlichkeit aus; die Anlage ist sehr kostengünstig in der Anschaffung und im Unterhalt.

Bei grosstechnischen Anwendungen - in grossen Bibliotheken etc. - kann der Erfindungsgegenstand durch Mittel des "Industrial handlings" auf einen grossen Durchsatz ausgerichtet und weitgehend automatisiert werden.

Die Anlage lässt sich leicht transportieren und kann vor Ort, beispielsweise in Archiven und Bibliotheken eingesetzt werden, so dass unnötige und zudem gefährliche Transporte von wertvollem Schriftgut entfallen.

## Patentansprüche

1. Vorrichtung zur Entsäuerung von Schriftgut, insbesondere von auffächerbarem Schriftgut wie gebundene Bücher, mittels mit alkalischen Wirkstoffen beladenen Luftstrahlen, in einer Aufnahmevorrichtung mit Stützteilen zum Einbringen von Schriftgut, **dadurch gekennzeichnet, dass** die beladenen Luftstrahlen über einen Luftverteiler (15) mit einer Abströmplatte (16) und Luftauslässen (17) geführt sind und dort als Flachstrahlen (S) austreten, dass das Schriftgut (5,6') durch wenigstens zwei dieser, zueinander versetzten parallelen Flachstrahlen (S) beaufschlagbar ist, dass die Flachstrahlen (S) zu seitlichen Stützteilen (2, 2') zumindest annähernd parallel ausgerichtet sind und relativ zu diesen in einer Ebene verschiebbar sind, derart, dass eine Reihe (R) von parallel versetzten Flachstrahlen (17) das Schriftgut vollständig und gleichmässig überstreichen und im Schriftgut Partikel des Wirkstoffs einlagern.

2. Vorrichtung nach Anspruch 1, **dadurch gekennzeichnet, dass** diese in einem durch einen Schwenkdeckel (11) dicht verschliessbaren Kasten (10) angeordnet ist, welcher mit Speise- und Ableitungen (23) versehen und mit Hilfsaggregaten (22) verbunden ist.

3. Vorrichtung nach Anspruch 1 oder 2, **dadurch gekennzeichnet, dass** der Luftverteiler (15) kastenförmig ausgestaltet ist.

4. Vorrichtung nach Anspruch 3, **dadurch gekennzeichnet, dass** der Luftverteiler (15) in einer Horizontalebene, seitlich verschiebbar (+v, -v) oberhalb der Stützteile (2, 2') angeordnet ist.

5. Vorrichtung nach Anspruch 4, **dadurch gekennzeichnet, dass** der Luftverteiler (15) oberhalb der Stützteile (2, 2') angeordnet ist, und dass die Stützteile (2, 2') mit ihrem Grundrahmen (8) in einer Horizontalebene seitlich verschiebbar sind.

6. Vorrichtung nach Anspruch 1, **dadurch gekennzeichnet, dass** ein Verdichter (19a) vorgesehen ist, welcher den beladenen Luftstrahl in einem Hauptstrom (H) umwälzt.

7. Vorrichtung nach Anspruch 6, **dadurch gekennzeichnet, dass** ein weiterer Verdichter (19b) vorgesehen ist, welcher einen Teil des beladenen Luftstrahls in einem Nebenstrom (N₀) über ein Filter (38) führt und diesem den Wirkstoff (K) entnimmt.

8. Vorrichtung nach Anspruch 1, 6 oder 7, **dadurch gekennzeichnet, dass** ein Teil des beladenen Luftstrahls in einem Nebenstrom (N₁) über ein Filter (38') über eine Entfeuchtungskammer (43) geführt ist.

9. Vorrichtung nach Anspruch 8, **dadurch gekennzeichnet, dass** der Nebenstrom (N₁') dem Hauptstrom (H) zugeführt ist.

10. Vorrichtung nach Anspruch 1 und 8, **dadurch gekennzeichnet, dass** eine Pulverzuführung (32') vorgesehen ist und dass diese in einer Mischdüse (50) einem Nebenstrom (N₀') zugeführt ist.

11. Vorrichtung nach Anspruch 1, **dadurch gekennzeichnet, dass** diese an eine thermische Entfeuchtungs- und Heizanlage (22) angeschlossen ist.

## Claims

1. A device for the deacidification of printed matter, in particular printed matter which can be fanned out, such as bound books, by means of air streams laden with alkaline active substances in a receiver having supporting parts for the insertion of printed matter, **characterised in that** the laden air streams are conveyed via an air diffuser (15) comprising an outflow plate (16) and air outlets (17), where they emerge as flat jets (S), **in that** the printed matter (5, 6') can be acted upon by at least two of these parallel, staggered flat jets (S), **in that** the flat jets (S) are at least substantially parallel to the lateral supporting parts (2, 2') and are displaceable relative thereto in a plane in such a manner that a staggered row (R) of parallel flat jets (17) covers the printed matter completely and uniformly and deposits particles of the active substance in the printed matter.

2. A device according to claim 1, **characterised in that** it is arranged in a case (10) tightly closable by a hinged cover (11) and provided with feed and discharge lines (23) and connected to auxiliary units (22).

3. A device according to claim 1 or 2, **characterised in that** the air diffuser (15) is box-shaped.

4. A device according to claim 3, **characterised in that** the air diffuser (15) is arranged in a horizontal plane and is laterally displaceable (+v, -v) above the supporting parts (2, 2').

5. A device according to claim 4, **characterised in that** the air diffuser (15) is arranged above the supporting parts (2, 2') and **in that** the supporting parts (2, 2') together with their base frame (8) are laterally displaceable in a horizontal plane.

6. A device according to claim 1, **characterised in that** a fan (19a) is provided which circulates the laden air stream in a main flow (H).

7. A device according to claim 6, **characterised in that** a further fan (19b) is provided which conveys a portion of the laden air stream via a filter (38) in a secondary flow (N₀) and removes the active substance (K) therefrom.

8. A device according to claim 1, 6 or 7, **characterised in that** a portion of the laden air stream is conveyed in a secondary flow (N₁) via a filter (38') and via a dehumidifying chamber (43).

9. A device according to claim 8, **characterised in that** the secondary flow (N₁') is fed into the main flow (H).

10. A device according to claims 1 and 8, **characterised in that** a powder inlet (32') is provided and **in that** the latter opens into a secondary flow (N₀') in a mixing nozzle (50).

11. A device according to claim 1, **characterised in that** it is connected to a thermal dehumidifying and heating system (22).

## Revendications

1. Dispositif pour désacidifier des documents, en particulier des documents pouvant être ouverts en éventail tels que des livres reliés, au moyen de jets d'air chargés d'agents alcalins, dans un dispositif de réception comportant des éléments d'appui pour l'introduction des documents, **caractérisé en ce que** les jets d'air chargés sont conduits par l'intermédiaire d'un diffuseur d'air (15) muni d'une plaque d'écoulement (16) et de sorties d'air (17) et en sortent sous forme de jets laminaires (S), que les documents (5, 6') peuvent recevoir au moins deux de ces jets laminaires (S) parallèles en déport mutuel, que les jets laminaires (S) ont une orientation au moins à peu près parallèle à des éléments d'appui latéraux (2, 2') et peuvent être déplacés dans un plan par rapport à ces derniers de telle sorte, qu'une rangée (R) de jets laminaires (17) en déport parallèle balaye complètement et régulièrement les documents et emmagasine dans ces derniers des particules de l'agent.

2. Dispositif suivant la revendication 1, **caractérisé en ce qu'**il est disposé dans un coffret (10), pouvant être fermé de façon étanche par un couvercle pivotant (11), muni de conduites d'alimentation et d'évacuation (23), et raccordé à des groupes auxiliaires (22).

3. Dispositif suivant l'une des revendications 1 et 2, **caractérisé en ce que** le diffuseur d'air (15) est configuré en forme de caisson.

4. Dispositif suivant la revendication 3, **caractérisé en ce que** le diffuseur d'air (15) est disposé au-dessus des éléments d'appui (2, 2') mobile latéralement (+v, -v) dans un plan horizontal.

5. Dispositif suivant la revendication 4, **caractérisé en ce que** le diffuseur d'air (15) est disposé au-dessus des éléments d'appui (2, 2'), et que les éléments d'appui (2, 2'), avec leur cadre de base (8), sont mobiles latéralement dans un plan horizontal.

6. Dispositif suivant la revendication 1, **caractérisé en ce qu'**il est prévu un compresseur (19a) qui fait circuler le jet d'air chargé dans un courant principal (H).

7. Dispositif suivant la revendication 6, **caractérisé en ce qu'**il est prévu un autre compresseur (19b) qui conduit une partie du jet d'air chargé dans un courant secondaire (N₀) par l'intermédiaire d'un filtre (38) et retire l'agent (K) de ce dernier.

8. Dispositif suivant l'une des revendications 1, 6 et 7, **caractérisé en ce qu'**une partie du jet d'air chargé est conduite dans un courant secondaire (N₁) par l'intermédiaire d'un filtre (38') au travers d'un compartiment de déshydratation (43).

9. Dispositif suivant la revendication 8, **caractérisé en ce que** le courant secondaire (N₁') est envoyé au courant principal (H).

10. Dispositif suivant les revendications 1 et 8,
**caractérisé en ce qu'**il est prévu une arrivée de poudre (32') et que cette dernière est envoyée à un courant secondaire (N₀') dans une buse mélangeuse (50).

11. Dispositif suivant la revendication 1, **caractérisé en ce qu'**il est raccordé à une installation de chauffage et de déshydratation thermique (22).
